# EUROPÄISCHE PATENTSCHRIFT

(11) **EP 1 075 347 B1**
(45) Veröffentlichungstag und Bekanntmachung des Hinweises auf die Patenterteilung: **17.10.2001**
(21) Anmeldenummer: 99920804.4
(22) Anmeldetag: 28.04.1999
(51) Int. Cl.: B23K 37/047

(54) **ANLAGE ZUM POSITIONIEREN UND VERSCHWEISSEN VON KAROSSERIETEILEN UNTERSCHIEDLICHER KFZ-TYPEN**
INSTALLATION FOR POSITIONING AND WELDING BODY PARTS OF DIFFERENT TYPES OF MOTOR VEHICLES
INSTALLATION POUR POSITIONNER ET SOUDER DES ELEMENTS DE CARROSSERIE DE DIFFERENTS TYPES D'AUTOMOBILES

(30) Priorität: 06.05.1998 DE 19820094
(43) Veröffentlichungstag der Anmeldung: 14.02.2001
(73) Patentinhaber: ThyssenKrupp Technologies AG, 45128 Essen (DE); Bayerische Motoren Werke Aktiengesellschaft, 80788 München (DE)
(72) Erfinder: ZHANG, Yimin, D-80686 München (DE); RHOADS, Scott, Moore, SC 29369 (US); MOSER, Manfred, D-86911 Driessen (DE); TRENCHANT, Jean-Luc, D-88281 Unterankenreute (DE)
(74) Vertreter: Dahlkamp, Heinrich-Leo, Dipl.-Ing.
(86) Internationale Anmeldenummer: EP9902858
(87) Internationale Veröffentlichungsnummer: WO9956908

(56) Entgegenhaltungen:
- EP-A- 0 438 989
- GB-A- 2 175 546
- US-A- 5 397 047

## Beschreibung

Die Erfindung betrifft eine Anlage zum Positionieren und Verschweißen von Karosserieteilen unterschiedlicher Kfz-Typen gemäß Oberbegriff des Patentanspruches 1 (siehe, zum Beispiel EP 0 438 989 A1).

Bekannt ist eine Anlage (DE 32 30 455 C2), mit der Karosserieteile von zwei unterschiedlichen Kfz-Typen positioniert und verschweißt werden können. Die Karosserieteile werden auf einen Montagerahmen, der in der Praxis auch als Geometrieskid bezeichnet wird, aufgelegt und zusammen mit dem Montagerahmen in eine Schweißstation gebracht. Im Bereich der Schweißstation sind auswechselbare Positioniereinrichtungen angeordnet, mit denen die auf dem Montagerahmen aufliegenden Karosserieteile positioniert werden, bevor sie miteinander verschweißt werden. Danach wird der Montagerahmen mit den verschweißten Karosserieteilen längs einer Fertigungslinie weiterbewegt. Bei modernen Fertigungslinien für Kraftfahrzeuge reicht das aber nicht aus, wenn ein häufiger Modellwechsel, z.B. zwischen Kraftfahrzeugen mit vier Türen, mit zwei Türen oder Kombifahrzeugen gefordert wird.

Aus der EP 0 438 989 A1, die als nächstliegender Stand der Technik angesehen ist, ist darüber hinaus eine Einrichtung zum Schweißen von Kraftfahrzeugkarosserie-Baugruppen, die durch gepresste, zuvor lose montierte Blechteile gebildet sind, bekannt, wobei die vormontierten Baugruppen auf einer Förderstraße in die Schweißstation transportiert und dort mit Hilfe von Positionierungsrahmen für den Schweißvorgang fixiert werden. Die Positionierungsrahmen sind dabei an die spezielle Gestalt eines jeweiligen Types angepasst und werden unterhalb der Führungsbahn für die Baugruppen in Längs- und Querrichtung herangeführt und durch eine Vertikalbewegung in eine obere Schweißposition gebracht. Die verschiedenen Baugruppen sind hierbei auf der Förderstraße lediglich lose positioniert und es müssen für jeden Kfz-Typ komplizierte Positionierungsrahmen herangeführt werden. Dadurch ist die Anzahl der Kfz-Typen, die verschweißt werden können, begrenzt.

Aufgabe der Erfindung ist es deshalb, bei einer Anlage der eingangs beschriebenen Gattung eine hohe Flexibilität hinsichtlich geforderter Produktänderungen zu gewährleisten.

Diese Aufgabe wird dadurch gelöst, dass die Montagerahmen neben den Aufnahmen und Positioniereinrichtungen auch Spanneinrichtungen für die Karosserieteile und die Montagehilfsrahmen jeweils Aufnahmen für weitere Karosserieteile unterschiedlicher Kfz-Typen sowie Einrichtungen zum Positionieren und Verspannen mit dem Montagerahmen aufweisen.

Bei dieser Anlage weist der Montagerahmen alle notwendigen Aufnahmen für die Karosserieteile, z.B. den Unterbau eines Kraftfahrzeuges auf, wobei der Unterbau aus den Untergruppen Vorbau, Hinterbau, Motorträger und Bodenblech bestehen kann. Die auf den Montagerahmen aufgelegten und dort zunächst positionierten sowie später mit anderen Karosserieteilen verschweißten Karosserieteile bleiben auf dem Montagerahmen und werden dort mit den zugeordneten Spanneinrichtungen des Montagerahmens festgehalten. Diese Spanneinrichtungen des Montagerahmens können als von externen Stelltrieben betätigbare Kniehebelspanner ausgebildet sein, sodass auf dem Montagerahmen keine Energie zum Spannen der Spanneinrichtung gebraucht wird. Genauso gut ist es jedoch möglich, Spanneinrichtungen mit pneumatisch betätigbaren Spannern zu verwenden. Es genügt, wenn die Spanneinrichtungen zu Beginn eines Abschnitts der Fertigungslinie gespannt werden, gegebenenfalls über einen separaten Medienanschluss, und am Ende dieses Abschnitts wieder gelöst werden.

Für Produktänderungen stehen mehrere Montagehilfsrahmen zur Verfügung, die auf einer eigenen Förderbahn unterhalb der Förderbahn für den Montagerahmen geführt sind. Jeder Montagehilfsrahmen weist Aufnahmen für Karosserieteile eines bestimmten Kfz-Typs auf und außerdem Einrichtungen zum Positionieren dieser Karosserieteile sowie außerdem eine Einrichtung zum Positionieren und Verspannen mit dem Montagerahmen, sodass der Montagehilfsrahmen, nachdem er von der Hubvorrichtung bis unter den Montagerahmen angehoben worden ist, relativ zum Montagehilfsrahmen positioniert und damit verspannt werden kann. Es können dann weitere Karosserieteile auf die schon vorhandenen aufgelegt und mit den Positioniereinrichtungen des Montagehilfsrahmens positioniert werden. Ein schneller Wechsel des Montagehilfsrahmens ist dann möglich, wenn im Bereich der Parkpositionen Transporteinrichtungen für den Transport der Montagehilfsrahmen zwischen der unteren Förderbahn und einer Parkposition vorgesehen sind. Als Transporteinrichtung können pneumatisch oder elektromotorisch betriebene Exzenter- oder Kettenheber zusammen mit Querförderbahnen vorgesehen sein.

Nach dem Zusammenführen des Montagerahmens und des Montagehilfsrahmens sind jedenfalls die dann darauf befindlichen Karosserieteile relativ zueinander so positioniert, dass sie miteinander durch zumindest einen Roboter verschweißt werden können.

Im einzelnen können die Förderbahnen jeweils zwei mit gegenseitigem Abstand angeordnete, mit Rollen versehene Schienen aufweisen, damit die Aufnahmen und die Einrichtungen zum Positionieren bzw. Verspannen des Montagehilfsrahmens ohne weiteres an den Montagerahmen herangeführt werden können. Dabei können die Positioniereinrichtungen die Spanneinrichtungen des Montagerahmens bzw. des Montagehilfsrahmens auf vom jeweiligen Rahmen ausgehenden Säulen angeordnet sein, wobei es sich versteht, dass zwischen der oberen Förderbahn für den Montagerahmen und der unteren Förderbahn für den Montagehilfsrahmen ein hinreichender Abstand besteht, der einen schnellen Wechsel eines Montagehilfsrahmens zuläßt.

Bei einer bevorzugten Ausführung der Erfindung ist zumindest ein vom Roboter bewegbarer und auf den Montagerahmen aufsetzbarer Aufsetzrahmen mit Widerlagern und Positioniereinrichtungen für weitere Karosserieteile vorgesehen. Mit diesem Aufsetzrahmen erhält man die Möglichkeit, weitere, lose Karosserieteile auf den Montagerahmen und/oder den Montagehilfsrahmen aufzulegen und gleichzeitig über den Aufsetzrahmen zu positionieren und festzulegen. Dazu ist der Aufsetzrahmen mit dem Montagerahmen und/oder Montagehilfsrahmen verspannbar.

Im Hinblick auf Produktänderungen sind verschiedene Aufsetzrahmen für Karosserieteile unterschiedlicher Kfz-Typen vorgesehen. Diese verschiedenen Aufsetzrahmen können bei Nichtbenutzung in einer Ablage abgesetzt werden, die im Arbeitsbereich des Roboters angeordnet ist.

Es versteht sich, dass in diesem Zusammenhang der Roboter nicht nur für Schweißarbeiten, sondern auch für Handlingsarbeiten, nämlich zum Transport der Aufsetzrahmen bzw. der Karosserieteile eingerichtet ist.

Im folgenden wird ein in der Zeichnung dargestelltes Ausführungsbeispiel der Erfindung erläutert; es zeigen:
- Fig. 1: schematisch eine Draufsicht auf eine sogenannte Geometriestation (Schweißstation in einer Fertigungslinie für den Zusammenbau von Kfz-Karosserieteilen),
- Fig. 2: teilweise und schematisch eine Seitenansicht des Gegenstandes nach Fig. 1,
- Fig. 3: teilweise und schematisch einen Vertikalschnitt in durch den Gegenstand nach Fig. 2,

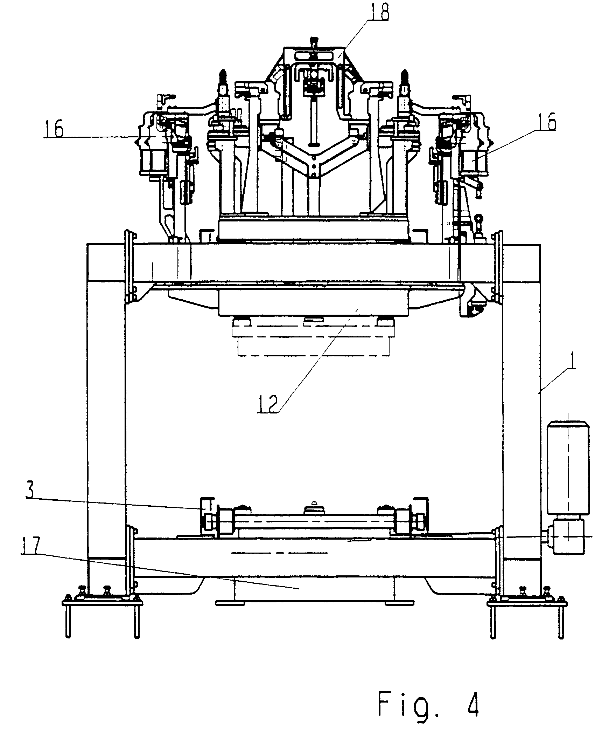

- Fig. 4: den Gegenstand nach Fig. 3 in einer anderen Funktionsstellung,
- Fig. 5: teilweise, schematisch und perspektivisch einen Montagerahmen
- Fig. 6: teilweise, schematisch und perspektivisch einen Montagehilfsrahmen,

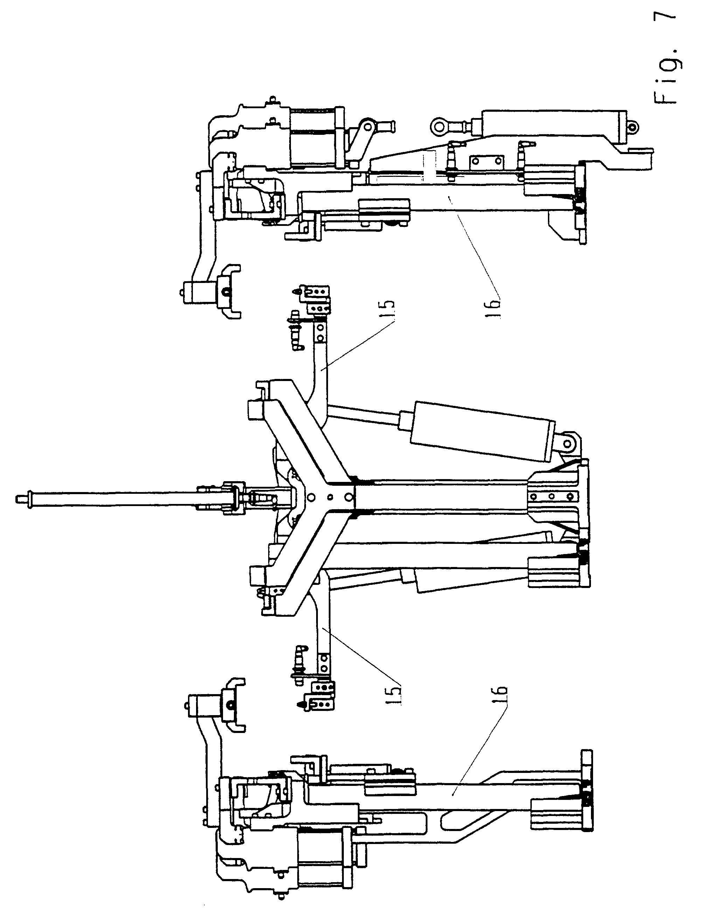

- Fig. 7: teilweise eine Ansicht in Transportrichtung von auf den Montagehilfsrahmen angeordneten Einrichtungen,
- Fig. 8: teilweise, schematisch und perspektivisch einen Aufsetzrahmen.

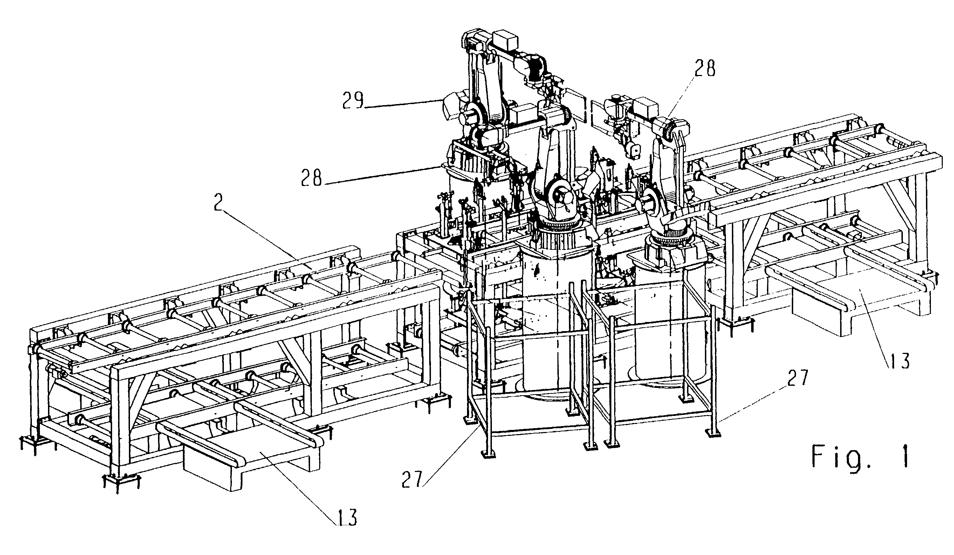

In Fig. 1 erkennt man einen Abschnitt einer Fertigungslinie für den Zusammenbau von Karosserieteilen eines Kraftfahrzeuges. Im Ausführungsbeispiel soll der Unterbau des Kraftfahrzeuges aus Vorbau, Hinterbau, Motorträger und Bodenblech montiert und sollen die einzelnen Karosserieteile miteinander verschweißt werden. Der Zerlegungsgrad der einzelnen Karosserieteile kann nach Kundenvorgabe auch anders sein.

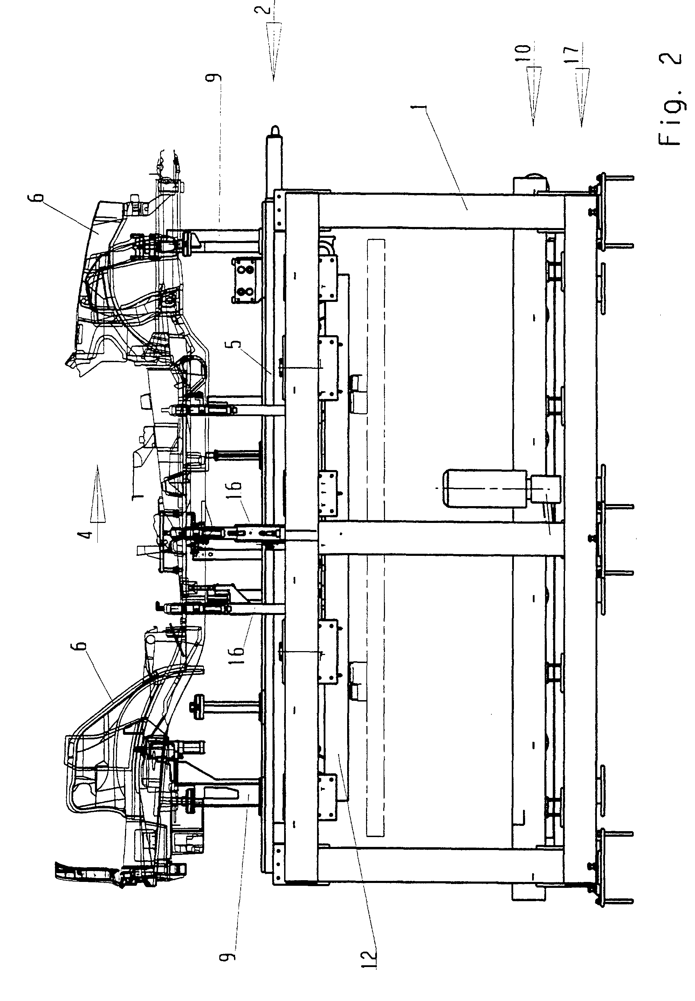

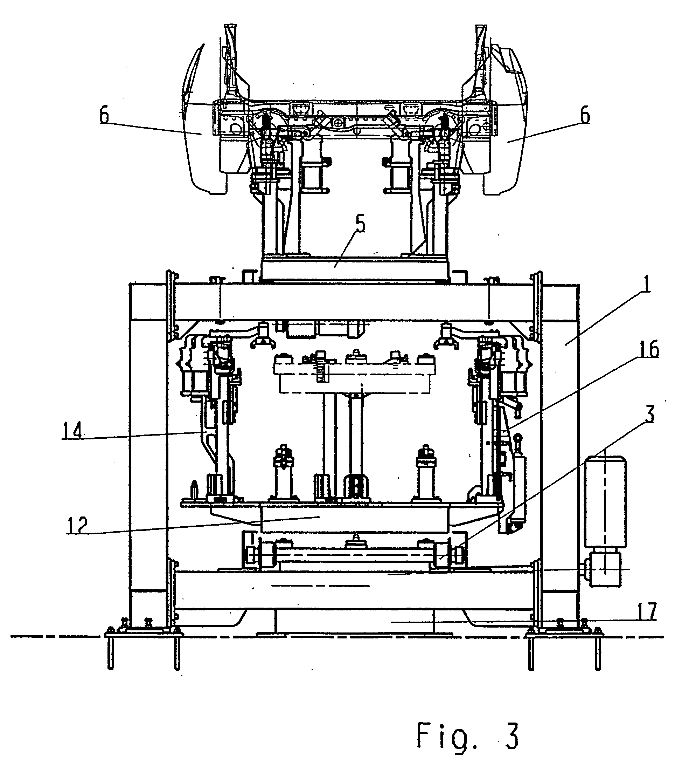

In einem zur Fertigungslinie gehörenden Gestell 1 (Fig. 2) ist eine obere Förderbahn 2 angeordnet, die aus zwei mit gegenseitigem Abstand angeordnete und mit Rollen 3 versehenen Schienen (Fig. 3) bestehen. Die Rollen 3 weisen nicht dargestellte Antriebe auf.

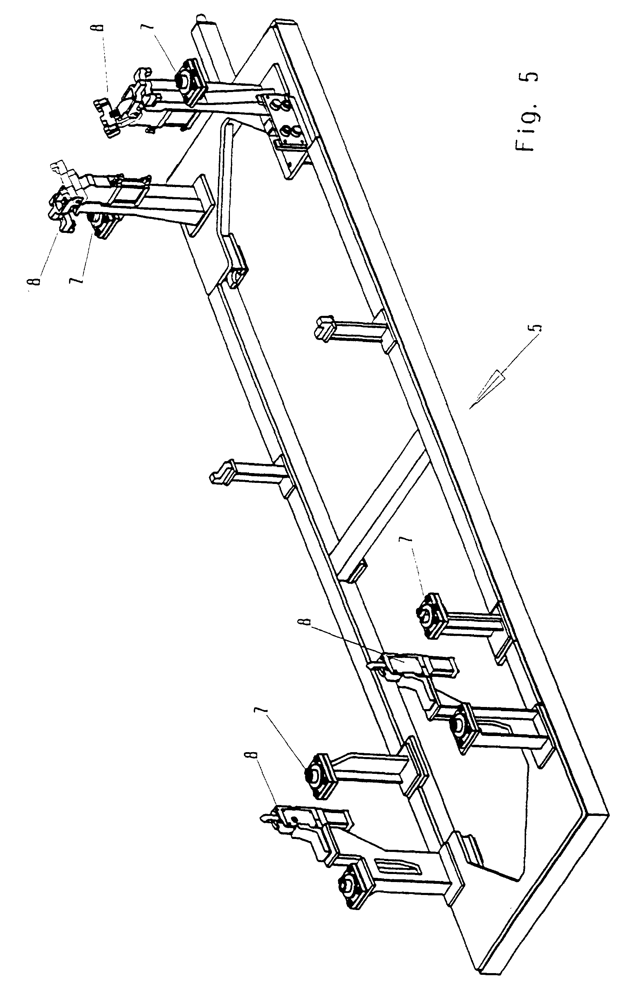

Auf der Förderbahn 2 wird in Transportrichtung 4 ein Montagerahmen 5 herangeführt, auf den bereits vorher einzelne Karosseriebauteile 6 aufgelegt worden sind. Dazu weist der Montagerahmen 5 auf Säulen angeordnete Auflagen 7 für die Karosseriebauteile 6 und Spanneinrichtungen 8 für die Karosseriebauteile 6 auf (Fig. 5). Die Spanneinrichtungen 8 werden von nicht dargestellten externen Stelltrieben betätigt, sodass auf dem Montagerahmen 5 keinerlei Energie für die Betätigung dieser Spanneinrichtungen erforderlich ist. Genausogut ist es jedoch möglich, Spanneinrichtungen mit pneumatisch betätigbaren Spannern zu verwenden. Die auf dem Montagerahmen 5 aufgelegten und dort mit Hilfe von Zentrierstiften 9 positionierten Karosserieteile 6 werden zu Beginn eines Abschnitts der Fertigungslinie mit Hilfe der extern betätigten Spanneinrichtungen 8 am Montagerahmen 5 festgelegt und in diesem Zustand mit dem Montagerahmen 5 weitertransportiert bis zum Ende des Abschnittes, wo die Spanneinrichtungen 8 mit Hilfe externer Stelltriebe wieder gelöst werden.

Im Gestell 1 befindet sich unterhalb der Förderbahn 2 eine weitere Förderbahn 10, die ebenfalls aus mit gegenseitigem Abstand angeordneten und antreibbaren Rollen 11 besteht (Fig. 2, 3). Auf dieser Förderbahn 10 ist einer von mehreren Montagehilfsrahmen 12 bewegbar. Für jeden Montagehilfsrahmen 12 gibt es eine neben der Fertigungslinie angeordnete Parkposition 13. Bei der dargestellten Ausführung sind insgesamt vier Parkpositionen 13 vorgesehen. Ein Montagerahmen 12 kann aus seiner Parkposition 13 mit einer nicht dargestellten Transporteinrichtung auf die Förderbahn 10 oder umgekehrt gebracht werden.

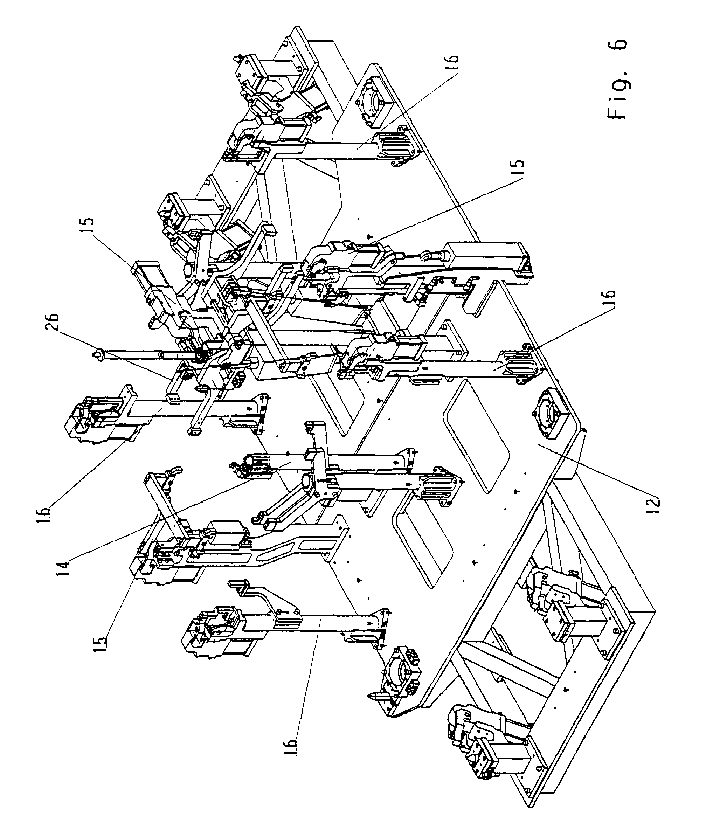

Jeder Montagehilfsrahmen 12 weist jeweils auf Säulen angeordnete Einrichtungen 14 zum Positionieren sowie Einrichtungen 15 zum Verspannen weiterer Karosserieteile auf (Fig 6). Diese Einrichtungen 14, 15 sind auf Säulen angeordnet und nach Maßgabe unterschiedlicher Modelltypen in unterschiedlicher räumlicher Anordnung zum Montagehilfsrahmen 12 angeordnet. Jeder Montagehilfsrahmen 12 weist darüber hinaus schwenkbare Spanneinrichtungen 16, insbesondere pneumatisch betätigbare Kniehebelspanner, auf, die dazu dienen, den Montagehilfsrahmen 12 mit dem Montagerahmen 5 zu verspannen. Das wird später erläutert.

Unterhalb der Förderbahn 10 für den Montagehilfsrahmen 12 befindet sich eine Hubvorrichtung 17, die bei der dargestellten Ausführung als Scherenhubtisch ausgebildet ist. Die Hubvorrichtung 17 dient dazu, den Montagehilfsrahmen 12 von seiner Förderbahn 10 abzuheben und ihn gegen die Unterseite des Montagerahmens 5 zu führen, damit der Montagehilfsrahmen 12 mit dem Montagerahmen 5 verspannt werden kann.

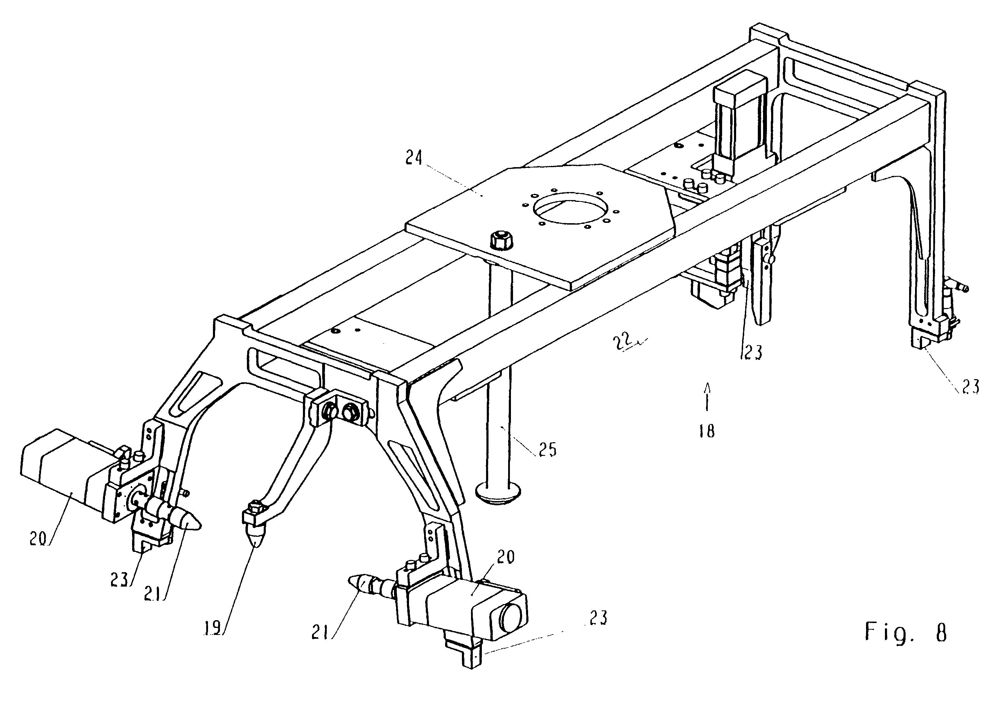

Zu der dargestellten Anlage gehört auch ein in Fig. 8 wiedergegebener Aufsetzrahmen 18. Der Aufsetzrahmen weist bei der dargestellten Ausführung zumindest einen festen Zentrierstift 19 und zwei mit Hubzylindern 20 verstellbare Zentrierstifte 21 zum Positionieren z.B. eines Tunnelbauteils auf. Der Aufsetzrahmen 18 weist bei der dargestellten Ausführung ferner eine Spanneinrichtung 22 zum Verspannen z.B. eines Sitzträgerholms auf.

Widerlager 23 des Aufsetzrahmens 18 halten die Karosserieteile gegen den Montagerahmen 5. An der Oberseite des Aufsetzrahmens 18 befindet sich ein Anschlußbauteil 24, an dem ein Roboter angreifen kann. Vom Anschlußbauteil 24 geht ein Spanndorn 25 aus, an den eine Spanneinrichtung 26 des Montagehilfsrahmens 12 angreifen kann.

Zur dargestellten Anlage gehören verschiedene Aufsetzrahmen 18, bei denen die Kontruktion und die räumliche Anordnung der dazugehörenden Einrichtungen oder Bauteile den Karosserieteilen unterschiedlicher Kfz-Typen angepaßt ist. Nicht benötigte Aufsetzrahmen 18 werden in zumindest einer Ablage 27 gespeichert. Bei der dargestellten Ausführung (Fig. 1) sind zwei Ablagen 27 angeordnet, die sich im Arbeitsbereich von zwei neben der Fertigungslinie bzw. neben dem Gestell 1 angeordneten Robotern 28 befinden, sodass der eine oder der andere Roboter 28 den jeweils passenden Aufsetzrahmen 18 über das Gestell 1 bringen kann.

Die Roboter 28 sind umrüstbar, sodass sie einerseits für den Transport der Aufsetzrahmen 18 und andererseits für Schweißarbeiten an den Karosserieteilen eingesetzt werden können. Auf der anderen Seite des Gestells 1 befindet sich ein weiterer Roboter 29 für Schweißarbeiten.

Die dargestellte Anlage arbeitet wie folgt: Ein mit Karosserieteilen 6 belegter Montagerahmen 5 wird auf seiner Förderbahn 2 bis in den Bereich der Roboter 28, 29 gefahren. Ein bereits in diesem Bereich befindlicher Montagehilfsrahmen 12 wird mit Hilfe der Hubvorrichtung 17 angehoben und dann mit Hilfe der schwenkbaren Spanneinrichtungen 16 mit dem Montagerahmen 5 verspannt. Dann werden weitere Karosserieteile auf den Montagerahmen 5 aufgelegt, wobei sie mit Hilfe der vom Montagehilfsrahmen 12 ausgehenden Einrichtungen 14 zum Positionieren in die richtige Position gebracht werden. Dann wird der jeweils benötigte Aufsetzrahmen 18 mit Hilfe eines der Roboter 28 auf die so vorgeordneten Karosserieteile aufgesetzt, die dabei, soweit erforderlich, ausgerichtet und festgelegt werden. Anschließend können die so fixierten Karosserieteile mit Hilfe der Roboter 28, 29 verschweißt werden. Nach Beendigung der Schweißarbeiten wird der Aufsetzrahmen 18 wieder abgenommen und wird der Montagehilfsrahmen 12 wieder abgesenkt. Der Montagerahmen 5 mit den daraufliegenden, miteinander verschweißten Karosserieteilen wird auf seiner Förderbahn weiterbewegt und der nächste Montagerahmen 5 mit lose aufgelegten Karosserieteilen kann zur weiteren Bearbeitung herangeführt werden.

Sollen Karosserieteile anderer Kfz-Typen miteinander verschweißt werden, braucht lediglich der Montagehilfsrahmen 12 gegen einen anderen und der Aufsetzrahmen 18 gegen einen anderen ausgetauscht werden.

### Bezugszeichenliste:

- 1: Gestell
- 2: Förderbahn
- 3: Rollen
- 4: Transportrichtung
- 5: Montagerahmen
- 6: Karosserieteile
- 7: Auflagen an 5
- 8: Spanneinrichtungen an 5
- 9: Zentrierstifte an 5
- 10: Förderbahn
- 11: Rollen
- 12: Montagehilfsrahmen
- 13: Parkposition
- 14: Einrichtung zum Positionieren an 12
- 15: Einrichtung zum Verspannen an 12
- 16: Spanneinrichtung an 12
- 17: Hubvorrichtung
- 18: Aufsetzrahmen
- 19: Zentrierstift an 18
- 20: Hubzylinder an 18
- 21: Zentrierstift an 18
- 22: Spanneinrichtung an 18
- 23: Widerlager an 18
- 24: Anschlußbauteil
- 25: Spanndorn
- 26: Spanneinrichtung
- 27: Ablage
- 28: Roboter
- 29: Roboter

## Patentansprüche

1. Anlage zum Positionieren und Verschweißen von Karosserieteilen (6) unterschiedlicher Kfz-Typen mit
- einem auf einer Förderbahn (2) geführten Montagerahmen (5), der Aufnahmen und Positioniereinrichtungen (9) für Karosserieteile (6) aufweist,
- wenigstens einem für Schweißarbeiten einsetzbaren Roboter (28, 29),
- einer unter der Förderbahn (2) angeordneten weiteren Förderbahn (10),
- auf der Förderbahn (10) geführten Montagehilfsrahmen (12),
- neben der unteren Förderbahn (10) angeordneten Parkpositionen (13) für die Montagehilfsrahmen (12) und
- einer Hubvorrichtung (17) für den Montagehilfsrahmen (12),
**dadurch gekennzeichnet, dass**
a) die Montagerahmen (5) neben den Aufnahmen und Positioniereinrichtungen (9) auch Spanneinrichtungen (8) für die Karosserieteile (6) und
b) die Montagehilfsrahmen (12) jeweils Aufnahmen für weitere Karosserieteile unterschiedlicher Kfz-Typen sowie Einrichtungen (16) zum Positionieren und Verspannen mit dem Montagerahmen (5) aufweisen.

2. Anlage nach Anspruch 1, **dadurch gekennzeichnet, dass** im Bereich der Parkpositionen (13) Transporteinrichtungen für den Transport der Montagehilfsrahmen (12) zwischen der unteren Förderbahn (10) und einer Parkposition (13) vorgesehen sind.

3. Anlage nach Anspruch 1 oder 2, **dadurch gekennzeichnet, dass** die Förderbahnen (2, 10) jeweils mit gegenseitigem Abstand angeordnete, mit Rollen (3, 11) versehene Schienen aufweisen.

4. Anlage nach einem der Ansprüche 1 bis 3, **dadurch gekennzeichnet, dass** die Positioniereinrichtungen (9, 14) und die Spanneinrichtungen (8, 15) des Montagerahmens (5) bzw. des Montagehilfsrahmens (12) auf vom Rahmen ausgehenden Säulen angeordnet sind.

5. Anlage nach einem der Ansprüche 1 bis 4, **dadurch gekennzeichnet, dass** die Spanneinrichtungen (8) des Montagerahmens (5) als von externen Stelltrieben betätigbare Kniehebelspanner ausgebildet sind.

6. Anlage nach einem der Ansprüche 1 bis 5, **dadurch gekennzeichnet, dass** zumindest ein vom Roboter (28) bewegbarer und auf den Montagerahmen (5) aufsetzbarer Aufsetzrahmen (18) mit Widerlagern (23) und Positioniereinrichtungen (19, 21) für weitere Karosserieteile vorgesehen ist.

7. Anlage nach einem der Ansprüche 1 bis 6, **dadurch gekennzeichnet, dass** jeder Aufsetzrahmen (18) mit dem Montagerahmen (5) und/oder dem Montagehilfsrahmen (12) verspannbar ist.

8. Anlage nach einem der Ansprüche 1 bis 7, **dadurch gekennzeichnet, dass** verschiedene Aufsetzrahmen (18) für Karosserieteile unterschiedlicher Kfz-Typen vorgesehen sind.

9. Anlage nach einem der Ansprüche 1 bis 8, **dadurch gekennzeichnet, dass** im Arbeitsbereich des Roboters (28) zumindest eine Ablage (27) für einen Aufsetzrahmen (18) angeordnet ist.

## Claims

1. Unit for positioning and welding body parts (6) of different motor vehicle models with
- an assembly frame (5), which is guided on a conveyor belt (2) and has mounts for at least some body parts (6),
- at least one robot (28, 29) that can be used for welding operations,
- one further conveyor belt (10) arranged under the conveyor belt (2),
- auxiliary assembly frames (12) guided on the conveyor belt (10),
- parking positions (13) for auxiliary assembly frames (12) arranged next to the lower conveyor belt (10), and
- a lifting device (17) for the auxiliary assembly frame (12),
**characterised in that**
a) the assembly frames (5) contain mounts and positioning means (9) as well as clamping means (8) for the body parts (6), and
b) the auxiliary assembly frames (12) do each have mounts for additional body parts of different motor vehicle models as well as said means (16) for positioning and clamping the assembly frame (5).

2. Unit in accordance with Claim 1, **characterised in that** said conveying means for conveying the said auxiliary assembly frames (12) between the said lower conveyor belt (10) and a said parking position (13) are provided in the area of the parking positions (13).

3. Unit in accordance with Claim 1 or 2, **characterised in that** the said conveyor belts (2, 10) have rails, which are arranged at mutually spaced locations and are provided with said rollers (3, 11).

4. Unit in accordance with one of the claims 1 through 3, **characterised in that** the said positioning means (9, 14) and the said clamping means (8, 15) of the said assembly frame (5) and of the said auxiliary assembly frame (12), respectively, are arranged on columns originating from the frame.

5. Unit in accordance with one of the claims 1 through 4, **characterised in that** the said clamping means (8) of the said assembly frame (5) are designed as toggle lever tensioners which can be actuated by external adjusting drives.

6. Unit in accordance with one of the claims 1 through 5, **characterised in that** at least one said support frame (18) with said abutments (23) and said positioning means (19, 21), which said support frame (18) can be braced with the said robot (28) and can be placed on the said assembly frame (5), is provided for additional body parts.

7. Unit in accordance with one of the claims **1** through 6, **characterised in that** each said support frame (18) can be braced with the said assembly frame (5) and/or with the said auxiliary assembly frame (12).

8. Unit in accordance with one of the claims **1** through **7**, **characterised in that** said different support frames (18) are provided for body parts of different motor vehicle models.

9. Unit in accordance with one of the claims 1 through 8, **characterised in that** at least one said storage area (27) for a said support frame (18) is arranged in the work area of said robot (28).

## Revendications

1. Installation pour positionner et souder des éléments de carrosserie (6) de différents types d'automobiles avec
- un cadre de montage (5) guidé sur une voie de transport (2) et possédant des dispositifs de réception et des installations de positionnement (9) pour des éléments de carrosserie (6),
- au moins un robot (28, 29) utilisable pour les travaux de soudage,
- une deuxième voie de transport (10) disposée sous la voie de transport (2),
- des cadres auxiliaires de montage (12) guidés sur la voie de transport (10),
- des positions de parcage (13) disposées auprès de la voie de transport inférieure pour les cadres auxiliaires de montage (12) et
- un dispositif de levage (17) pour le cadre auxiliaire de montage (12),
**caractérisée en ce que**
a) les cadres de montage (5) possèdent, outre les dispositifs de réception et les dispositifs de positionnement (9), des dispositifs de serrage (8) pour les éléments de carrosserie (6) et
b) les cadres auxiliaires de montage (12) des dispositifs de réception pour d'autres éléments de carrosserie de différents types d'automobiles ainsi que des dispositifs (16) pour le positionnement et le serrage avec le cadre de montage (5).

2. Installation selon la revendication 1, **caractérisée en ce que** des installations de transport sont prévues au niveau des positions de parcage (13) pour le transport des cadres auxiliaires de montage (12) entre la voie de transport inférieure (10) et une position de parcage (13).

3. Installation selon la revendication **1** ou 2, **caractérisée en ce que** les voies de transport (2, 10) possèdent chacune des rails disposés à une certaine distance l'un de l'autre et dotés de galets (3, 11).

4. Installation selon une des revendications **1** à 3, **caractérisée en ce que** les dispositifs de positionnement (9, 14) et les dispositifs de serrage (8, 15) du cadre de montage (5) et du cadre auxiliaire de montage (12) sont disposés sur des colonnes partant du cadre.

5. Installation selon une des revendications **1** à 4, **caractérisée en ce que** les dispositifs de serrage (8) du cadre de montage (5) se présentent sous forme de tendeurs à genouillère actionnés par des actionneurs externes.

6. Installation selon une des revendications 1 à 5, **caractérisée en ce qu'**au moins un cadre supérieur (18) avec butées (23) et dispositifs de positionnement (19, 21) pouvant être placé sur le cadre de montage (5) et déplacé par le robot (28) est prévu pour d'autres éléments de carrosserie.

7. Installation selon une des revendications 1 à 6, **caractérisée en ce que** chaque cadre supérieur (18) peut être serré avec le cadre de montage (5) et/ou le cadre auxiliaire de montage (12).

8. Installation selon une des revendications 1 à 7, **caractérisée en ce que** différents cadres supérieurs (18) sont prévus pour des éléments de carrosserie de différents types d'automobiles.

9. Installation selon une des revendications 1 à 8, **caractérisée en ce qu'**au moins un dépôt (27) pour un cadre supérieur (18) est disposé dans l'aire de travail du robot (28).
